(19) Europäisches Patentamt
European Patent Office
Office européen des brevets

(11) Numéro de publication : **0 079 900**
**B1**

(12) **FASCICULE DE BREVET EUROPÉEN**

(45) Date de publication du fascicule du brevet :
10.09.86

(51) Int. Cl.⁴ : **C 14 B   5/00, B 23 K 26/08**

(21) Numéro de dépôt : **82901517.1**

(22) Date de dépôt : **25.05.82**

(86) Numéro de dépôt international :
**PCT/FR 82/00086**

(87) Numéro de publication internationale :
**WO/8204266 (09.12.82 Gazette 82/29)**

(54) **PROCEDE DE DECOUPE DE PIECES EN CUIR NATUREL DANS DES PEAUX D'ANIMAUX.**

(30) Priorité : 26.05.81 FR 8110441

(43) Date de publication de la demande :
01.06.83 Bulletin 83/22

(45) Mention de la délivrance du brevet :
10.09.86 Bulletin 86/37

(84) Etats contractants désignés :
AT BE CH DE GB LI LU NL SE

(56) Documents cités :
FR-A- 2 210 132
FR-A- 2 387 745
FR-A- 2 438 533
US-A- 1 899 805
US-A- 3 490 147
US-A- 3 761 675
US-A- 3 887 903

(73) Titulaire : **Claude Benedite LASER TECHNIQUES Saint-Cyr**
**F-87310 St.-Laurent-sur-Gorre (FR)**

(72) Inventeur : **BENEDITE, Claude**
**90, rue des Vignes**
**F-87350 Panazol Haute-Vienne (FR)**

(74) Mandataire : **Chevallier, Robert Marie Georges**
**Cabinet BOETTCHER 23, rue La Boétie**
**F-75008 Paris (FR)**

## Description

L'invention a pour objet un procédé relatif à la confection de manière optimale, à partir de peaux d'animaux présentant des défauts divers localisés, d'un jeu de pièces découpées dans ces peaux et destinées à être assemblées pour constituer un article fini.

L'invention est applicable principalement à la fabrication des chaussures ; bien qu'elle ne doive pas être restreinte nécessairement à ce domaine c'est pourtant à ce dernier que l'on se référera plus loin pour donner une explication concrète de la mise en œuvre du procédé qui en fait l'objet.

L'une des particularités de la confection de pièces diverses en cuir naturel découpées dans des peaux est que celles-ci présentent inévitablement des défauts variés et localisés dont l'emplacement et l'étendue sont différents d'une peau à l'autre ; pour cette raison il n'est pas possible de superposer les peaux pour en faire un matelas qui serait découpé en une seule fois ainsi qu'il est connu et pratiqué couramment dans d'autres domaines comme celui de la confection des vêtements. Il est nécessaire d'opérer sur chaque peau individuellement pour essayer d'en tirer le plus grand nombre possible de pièces en évitant les défauts.

Jusqu'à présent, il a paru logique et rationnel de procéder de la façon suivante. Chaque peau est prise séparément et on effectue manuellement le placement, en dehors des défauts, du contour de pièces diverses, variées en forme et en dimensions, afin d'exploiter au mieux la surface utilisable de la peau. En général, le placement ne se fait pas à l'aide de gabarits de traçage mais directement à l'aide d'emporte-pièce de découpage de sorte que le placement et le découpage sont deux opérations qui, en pratique, s'exécutent en même temps. Quand il est nécessaire de traiter un grand nombre de peaux pour obtenir la quantité voulue des diverses pièces à employer, le nombre des emporte-pièce est lui-même élevé ; en outre l'exploitation optimum d'une peau exige un grand nombre d'opérations de montage sur une presse, et de démontage, des emporte-pièce utilisés successivement en fonction des possibilités de leur placement sur la surface utile d'une peau en dehors des défauts. Le coût de fabrication des nombreux emporte-pièce et la somme immobilisée dans cet outillage atteignent une valeur considérable.

On notera aussi que la découpe à l'emporte-pièce oblige à laisser entre deux pièces un intervalle de quelques millimètres car la tangence du contour de deux pièces voisines ne permettrait pas d'obtenir deux pièces découpées correctement dans la zone du point de tangence. Il en résulte à chaque peau une perte de matière qui n'est pas négligeable si l'on tient compte du prix élevé du cuir naturel.

En outre le document US-A-3 761 675 décrit un système de coupe et marquage au laser de pièces d'étoffe à assembler, en une seule épaisseur et non en matelas, dans lequel il est prévu que des patrons sont disposés par des personnes habiles à faire le placement, en vue de l'exécution de vêtements dans une matière homogène sans défaut comme un tissu, après quoi on enregistre la position des patrons dans la mémoire d'un ordinateur et celui-ci commande ensuite, quand on le désire, la coupe des pièces par un laser dans une étoffe quelconque ; ce document ajoute que ce système peut être étendu à la coupe de pièces de chaussures dans du cuir, sans examiner les difficultés inhérentes à cette matière telles que les défauts imprévisibles et variables de chaque peau et son extensibilité différente selon les directions.

L'invention a pour but principal d'apporter un procédé de placement et de découpe particulièrement approprié à l'obtention de pièces à partir de peaux d'animaux, traitées individuellement, rendant inutile l'emploi d'emporte-pièces grâce à une découpe au laser et tenant compte des particularités du cuir naturel comme les défauts imprévisibles et l'extensibilité différente selon les directions.

Selon l'invention, on procède de la façon suivante. A partir de gabarits qui présentent chacun le contour d'une pièce déterminée, on identifie chaque gabarit en y apposant un code à barres lisible par des organes de lecture connus en soi et un ensemble de deux points espacés d'une distance déterminée également lisibles.

On introduit dans une mémoire d'un ordinateur ce code des gabarits et la définition de leur contour.

En partant de peaux dont on doit tirer le plus grand nombre possible de pièces, on procède au placement manuel des gabarits sur chaque peau en évitant les défauts.

On détermine à l'aide d'une table dite de digitalisation, connue en soi, la position des gabarits sur chaque peau au moyen du repère que porte chaque gabarit et on enregistre dans la mémoire de l'ordinateur ladite position en association avec un repère individuel à la peau en question.

Après cette opération on pourrait procéder aussitôt à la découpe de la peau mais il est préférable selon un aspect de l'invention de garder la peau repérée et de ne la découper que plus tard, lorsqu'on a besoin des pièces dont le placement a été fait sur elle.

Selon l'une ou l'autre manière de faire, on découpe la peau à l'aide d'un laser, connu en soi, dont le fonctionnement est commandé par l'ordinateur dans la mémoire duquel le placement des gabarits sur cette peau et la définition du contour de ces gabarits ont été préalablement enregistrés, comme on l'a dit plus haut.

L'emploi d'un laser comme moyen de découpe du cuir naturel n'offre pas de difficulté particulière, à part le réglage des conditions de fonctionnement, mais ce réglage est à la portée de l'homme du métier. Il n'est donc pas nécessaire de donner une description détaillée de cette opération. Le laser convient parfaitement à la commande de la découpe par un ordinateur en raison de son aptitude à suivre exactement les contours les plus complexes. La coupe du cuir est tout à fait nette et, de plus, les contours peuvent être très proches les uns des autres jusqu'à être tangents les uns avec les autres sans que l'exactitude du contour des pièces découpées en souffre. En outre, un laser est apte à exécuter sur chaque pièce des opérations complémentaires impossibles à réaliser pour la plupart avec les moyens classiques de découpe comme par exemple l'exécution d'entailles ou de fentes ou de parties prédécoupées ou encore le marquage des lignes des coutures qui seront faites par la suite.

A la mise en œuvre que l'on vient de décrire du procédé de l'invention, on peut apporter plusieurs perfectionnements. Au lieu de faire le placement sur la peau à l'aide de gabarits en grandeur réelle on peut faire le placement par projection optique de leur image sur la peau ; dans ce cas, les gabarits ou plutôt les dessins ou tracés qui en tiennent lieu n'ont pas besoin d'être réalisés aux dimensions réelles ; ils peuvent être en réduction et leur image peut être agrandie lors du placement.

Un avantage du procédé de l'invention est qu'il devient facile et rapide de passer d'un jeu de pièces constituant un premier article de référence aux jeux de pièces qui constituent des articles dérivés de ce premier article puisqu'un ordinateur est apte à exécuter cette transposition quand les contours des pièces du premier article lui ont été fournis.

Selon un perfectionnement supplémentaire de l'invention, on définit un contour général des peaux pour en faire un contour normalisé dont on introduit les données dans la mémoire de l'ordinateur. Ensuite, à partir de chaque peau individuelle ayant ce contour général normalisé, on repère sur chacune d'elles les défauts qu'elle présente et on laisse l'ordinateur faire le placement par une méthode d'optimisation connue en soi.

La codification des gabarits et la définition de leur contour sont faites en employant un code à barres pour identifier les divers gabarits et leur contour et en marquant en plus sur chaque gabarit deux points A et B facilement reconnaissables par des organes automatiques de lecture optique, ces points étant espacés d'une distance déterminée propre à chaque gabarit en relation avec son contour. Bien entendu, ce marquage peut se faire aussi à l'aide de marques magnétiques susceptibles d'être lues par des moyens électro-magnétiques.

Le procédé de l'invention a été mis au point spécialement pour le traitement des peaux en cuir naturel qui est une matière que l'on peut appeler hétérogène en raison de l'existence de défauts variables et de zones de qualités diverses.

Un autre perfectionnement peut être apporté au procédé de l'invention, qu'il soit appliqué au cuir naturel ou à une matière homogène. Quand on a mis en mémoire le type et l'emplacement des gabarits placés sur une surface en vue de la découpe des pièces, il est avantageux, quand cette découpe a été exécutée, d'utiliser des moyens automatiques ou au moins semi-automatiques de préhension, de déchargement et de rangement des pièces découpées. Ces moyens sont asservis à l'ordinateur et réalisent le rangement des pièces selon un classement prédéterminé en fonction des données relatives aux gabarits correspondants qui ont été mises en mémoire.

## Revendications

1. Procédé pour le découpage de pièces diverses dans une matière en plaque ou en feuille comme le cuir naturel, à partir d'une peau d'animal susceptible de présenter des défauts localisés répartis au hasard, les pièces à découper étant définies chacune par un gabarit ayant un repère et un contour conservés dans la mémoire d'un ordinateur, selon lequel le placement des gabarits est effectué par du personnel entraîné, la position des gabarits placés est enregistrée dans la mémoire d'un ordinateur et la découpe est exécutée ensuite par un laser dirigé par l'ordinateur, caractérisé en ce qu'on utilise des gabarits de grandeur réelle ou de grandeur réduite projetés optiquement qui portent comme repère un code à barres associé respectivement au contour de chaque gabarit et un ensemble de deux points espacés d'une distance déterminée propre à chaque gabarit en relation avec son contour et on enregistre dans la mémoire de l'ordinateur le placement des gabarits relativement à chacune des plaques ou feuilles de cuir naturel.

2. Procédé selon la revendication 1 caractérisé en ce qu'on affecte à la plaque un repère individuel qui lui est propre, on enregistre ce repère avec la position du repère de chaque gabarit et on conserve la plaque en magasin en vue d'un découpage ultérieur.

3. Procédé selon la revendication 1 caractérisé en ce que l'on effectue sur les pièces en même temps que l'opération de découpe au moyen du laser des opérations supplémentaires telles que : marquage de lignes de couture, fentes, entailles, préparation de parties prédécoupées.

4. Procédé selon la revendication 1 caractérisé en ce qu'on attribue à chaque plaque un contour général normalisé à l'intérieur duquel on effectue le placement des pièces repérées.

## Claims

1. A method of cutting out various pieces from material in the form of a plate or sheet such as natural leather from the skin of an animal which may exhibit localized defects distributed at random, the pieces to be cut out being defined each by a pattern having a reference and an outline preserved in the memory of a computer, wherein the placing of the patterns is carried out by trained personnel, the positions of the placed patterns are recorded in the memory of a computer and the cutting out is then carried out by a laser directed by the computer, characterized in that full-size or reduced-size patterns are employed which are projected optically and which bear as reference a bar code associated respectively with the outline of each pattern and a set of two points at a certain distance a part corresponding to eahc pattern with respect to its outline, and the placing of the patterns relative to eac of the plates or sheets of natural leather is recorded in the memory of the computer.

2. A method as in Claim 1, characterized in that there is assigned to the plate its own individual reference, this reference is recorded together with the position of the reference of each pattern and the plate is kept in a store with a view to cutting it out subsequently.

3. A method as in Claim 1, characterized in that simultaneously with the operation of cutting out by means of the laser, supplementary operations are carried out on the pieces such as : marking of stitch lines, slits or notches and dressing of portions previously cut out.

4. A method as in Claim 1, characterized in that to each plate is assigned one standardized general outline within which is carried out the placing of the referenced pieces.

**Patentansprüche**

1. Verfahren zum Ausschneiden von unterschiedlichen Stücken aus einem tafeloder folienförmigen Werkstoff wie Naturleder aus einer Tierhaut, die zufällig angeordnete Fehlstellen aufweist, bei dem jedes der auszuschneidenden Stücke durch eine Schablone festgelegt wird, die eine in den Speicher eines Rechners eingegebene Markierung und Kontur hat, nach welcher geschultes Personal die Schablonen anordnet, und bei dem die Position der angeordneten Schablonen in den Speicher des Rechners eingegeben und danach der Schnitt von einem vom Rechner gesteuerten Laser ausgeführt wird, dadurch gekennzeichnet, daß optisch projizierte Schablonen mit natürlicher Größe oder verkleinertem Maßstab verwendet werden, die als Markierung einen Strichkode tragen, der mit der Kontur jeder Schablone und zwei zusammengehörigen Punkten verbunden ist, die in einem bestimmten für jede Schablone in Verbindung mit ihrer Kontur typischen Abstand angeordnet sind, und daß die relative Anordnung der Schablonen auf jeder Naturledertafel oder -folie in den Speicher des Rechners eingegeben wird.

2. Verfahren nach Anspruch 1, dadurch gekennzeichnet, daß die Tafel mit einer individuellen Markierung versehen ist, die zusammen mit der Position der Markeirung für jede Schablone gespeichert wird, und für eine späteres Ausschneiden aufbewahrt wird.

3. Verfahren nach Anspruch 1, dadurch gekennzeichnet, daß die Stücke zur gleichen Zeit, während der das Ausschneiden mit dem Laser erfolgt, zusätzlichen Maßnahmen unterzogen werden, wie Markieren von Konturlinien, Schlitzen, Einkerben, Zurichten von vorgeschnittenen Teilen.

4. Verfahren nach Anspruch 1, dadurch gekennzeichnet, daß jeder Tafel eine einheitliche Hauptkontur zugewiesen wird, in deren Innerem Markierungsstücke angeordnet werden.